# EUROPÄISCHE PATENTSCHRIFT

(11) **EP 2 822 819 B1**
(45) Veröffentlichungstag und Bekanntmachung des Hinweises auf die Patenterteilung: **25.12.2019**
(21) Anmeldenummer: 13707617.0
(22) Anmeldetag: 04.03.2013
(51) Int. Cl.: B60R 25/20, B60R 25/24

(54) **MOBILFUNK-BASIERTES WEGFAHRSPERRSYSTEM MIT TÜRÖFFNER MIT DIEBSTAHLALARM**
MOBILE-RADIO-BASED IMMOBILIZER SYSTEM HAVING A DOOR OPENER HAVING A THEFT ALARM
SYSTÈME ANTI-DÉMARRAGE BASÉ SUR LA TÉLÉPHONIE MOBILE, COMPRENANT UNE GÂCHE ÉLECTRIQUE POURVUE D'UNE ALARME ANTIVOL

(30) Priorität: 05.03.2012 DE 102012101836
(43) Veröffentlichungstag der Anmeldung: 14.01.2015
(73) Patentinhaber: Lünstedt, Oliver, 13359 Berlin (DE)
(72) Erfinder: SACHDEVA, Sahil, 10553 Berlin (DE)
(74) Vertreter: Farago-Schauer, Peter Andreas
(86) Internationale Anmeldenummer: PCT/EP2013/054243
(87) Internationale Veröffentlichungsnummer: WO 2013/135509

(56) Entgegenhaltungen:
- DE-A1-102005 034 117
- FR-A1- 2 771 982
- US-B1- 7 538 655
- Oliver Luenstedt: "Carzapp - Power Point Presentation", Ecosummit - ECO12 Düsseldorf , 22. März 2012 (2012-03-22), XP002696946, Gefunden im Internet: URL:http://ecosummit.net/uploads/eco12_141 112_1150_oliverluenstedt_carzapp.pdf [gefunden am 2013-05-14]

## Beschreibung

Die vorliegende Erfindung betrifft ein Wegfahrsperrsystem mit einer Mobilfunk- und einer Nahfeldfunkschnittstelle, über die die zusätzliche Wegfahrsperre aktiviert bzw. deaktiviert werden können. Über eine Schnittstelle zu einem zentralen Schließsystem können Türen geschlossen bzw. geöffnet werden. Als im Fahrzeug verbaute Unterbrecherrelais werden ein Smart-Relais und bevorzugt ein Funkrelais angesteuert, wobei das Smart-Relais auf eine Überbrückung dessen Unterbrecherkontakte und auf ein Abklemmen hin überwacht wird, worauf ein Diebstahlalarm erzeugt würde.

Durch die Entstehung neuer Car-Sharing- bzw. Fahrzeugvermietungsunternehmen werden neuartige Konzepte zu einer Absicherung vor Fahrzeugdiebstahl benötigt, auch Im Hinblick darauf, dass ein Fahrzeugschlüssel im Fahrzeug verbleiben kann.

Das Car-Sharing-Unternehmen Flinkster der deutschen Bahn sieht beispielsweise ein System und ein Verfahren vor, bei dem der Fahrzeugschlüssel im Fahrzeug verbleibt und zusätzlich eine Wegfahrsperre mit Türöffner- und -schließfunktion im Fahrzeug verbaut ist. Die Wegfahrsperre weist dabei eine Mobilfunkschnittstelle zu einem Server-Hintergrundsystem auf, über das vor Antritt der Fahrt ein Freigabecode an die Wegfahrsperre übermittelt wird. Über eine RFID-Schnittstelle kann das Fahrzeug durch den Fahrer, nachdem eine Freigabe durch einen Freigabecode mobilfunkgesteuert übermittelt worden ist, mit einem personalisierten RFID-Chip geöffnet werden. Der Freigabecode umfasst dabei auch die Freigabe für den personalisierten RFID-Chip des Fahrers. Wird der in der Wegfahrsperre freigegebene RFID-Chip an eine bestimmte Stelle am Fahrzeug gehalten, kann dies detektiert werden und es wird dadurch eine Fahrertüre geöffnet. Zudem weist die Wegfahrsperre ein Unterbrecherrelais auf, um dadurch beispielsweise die Zündung (Ignition) oder ähnliches zu unterbrechen bzw. wieder freizugeben. Die Wegfahrsperre ist dabei bevorzugt in bestimmte Fahrzeugtypen eingebaut, an die die Wegfahrsperre angepasst ist, wie beispielsweise dadurch, dass eine Zünd- oder Startunterbrechung an einer bestimmten Stelle im Fahrzeug leicht angeschlossen werden kann, und dennoch eine gute Diebstahlsicherung besteht, indem die Wegfahrsperre beispielsweise über einen Fahrzeugbus mit einer Motorsteuerelektronik des Fahrzeugs kommuniziert, wobei der Fahrzeugbus nicht so leicht von einem Dieb überbrückbar ist. Ein Verbau einer gleichartigen Wegfahrsperre in einem anderen beliebigen Fahrzeug, wie es beispielsweise bei privaten Fahrzeugen der Fall wäre, ist problematisch, da einfach installierbare Unterbrecherrelais leicht verfolgbar und überbrückbar wären und eine Fahrzeugbusverbindung von Fahrzeugtyp zu Fahrzeugtyp sehr unterschiedlich ist und darüber hinaus für eine Anbindung eine spezielle Freigabe durch den Hersteller erforderlich wäre.

Ein anderes Konzept der Wegfahrsperre bei einem Car-Sharing bzw. bei einer Autovermietung ist in US 7538655 B1 beschrieben, bei dem die Wegfahrsperre ebenfalls durch Übermittlung eines Codes über ein Handfunkgerät für eine bestimmte Zeit in einer ersten Stufe freigegeben wird, wobei bei Annäherung des RFID-Chips an die Wegfahrsperre die Türen geöffnet und das Unterbrecherrelais deaktiviert werden. Aber auch hier besteht die Gefahr, dass das Unterbrecherrelais durch die Verkabelung vom Dieb leicht aufgefunden und überbrückt werden kann. Um die Wegfahrsperre durch den Code über das Handfunkgerät freizugeben, muß zunächst der entsprechende Code vom Car-Sharing-Unternehmen telefonisch erfragt werden. Eine Server-basierte Lösung, bei der der Kunde per Mobiltelefon mit Datenverbindung eine Freigabe erbittet und die Freigabe dann automatisch bis zum Fahrzeug ausgeführt würde, wäre wünschenswert, ist aber nicht vorgesehen.

FR 2 771 982 A1 offenbart eine elektronische Wegfahrsperre mit einem integrierten Unterbrecherrelais, die zudem über ein Funkmodul mit einem externen Funknetzwerk in Verbindung steht, um darüber Steuersignale zu empfangen oder Fahrzeugsignale zu übermitteln. Zudem werden durch die elektronische Wegfahrsperre externe Licht- und Bremssignale, eine Videokamera und ein Mikrofon auswertet und Steuersignale beispielsweise an Türöffner ausgegeben.

DE 10 2005 034 117 A1 offenbart eine Überwachungseinrichtung unter anderem für eine Wegfahrsperre, wobei ein Überwachungssignal über die Batterieleitung oder eine Stromversorgungsleitung übertragen wird, um ein Unterbrecher-Relais anzusteuern.

Vor allem bei größeren Verbänden von Car-Sharing-Fahrzeugen, die für den Dieb auch hinsichtlich eines jeweiligen Standortes offenkundig werden können, und bei denen zudem der Fahrzeugschlüssel für den nächsten Fahrer im Fahrzeug deponiert verbleibt, herrscht ein erhöhtes Diebstahlrisiko vor. Eines solchen Risikos sind sich Unternehmen oder Privatpersonen, die sich beispielsweise mit ihrem Fahrzeug an einem Car-Sharing-Unternehmen beteiligen können, bewußt. Vor allem auch bei dem Wunsch, beliebige und nicht nur spezielle Fahrzeugtypen in einem Car-Sharing-Konzept zu integrieren, sollte eine dafür geeignete, zu einem Zündschloß zusätzliche Wegfahrsperre a) leicht in verschiedene Fahrzeugtypen integrierbar und adaptierbar sein, b) mit geringerem Aufwand und damit kostengünstig verbaut werden können, c) eine hohe Sicherheit gewährleisten, und d) bei Starten des Motors trotz aktivierter zusätzlicher Wegfahrsperre möglichst einen Diebstahlalarm aussenden können. Oft müssen derzeitige zusätzliche Wegfahrsperren, falls das Unterbrecherrelais nicht leicht entlang einer Verdrahtung aufgefunden werden soll, mit viel Aufwand und Verdrahtungslänge verbaut werden. Zudem wäre es auch im Hinblick auf einen immer multifunktionaleren Einsatz der Mobiltelefone bzw. Smartphones als ständige Begleiter vorteilhaft, wenn diese auch zum Türöffnen bzw. -schließen verwendet werden könnten.

### Zusammenfassung der Erfindung

Aufgabe der Erfindung ist es daher, die Nachteile aus dem Stand der Technik zu überwinden und eine Wegfahrsperre zu schaffen, die über eine Mobilfunkschnittstelle zu deren Deaktivierung oder Aktivierung verfügt, und die sowohl mit möglichst geringem Aufwand verbaut werden kann, als auch eine unerlaubte Überbrückung eines Unterbrecherrelais zu einem Starten des Motors detektiert und dabei einen Diebstahlalarm auslöst.

Die vorstehenden Aufgaben sowie weitere, der Beschreibung zu entnehmende Aufgaben werden durch ein Wegfahrsperrsystem und durch ein entsprechendes Verfahren gemäß der Merkmalskombination der unabhängigen Ansprüche 1 bzw. 12 gelöst.

Weitere vorteilhafte Merkmale und Ausführungsformen der Erfindung sind in den abhängigen Ansprüchen 2-11 bzw. 13-14 angegeben.

Vorteilhafterweise kann dabei eine Freigabe der Wegfahrsperre und ein Türöffnen im Fahrzeug durch einen einfachen Anruf oder durch eine Datenverbindung von einem Mobiltelefon aus vorgenommen werden. Dabei braucht ein Kunde mit seinem Mobiltelefon nur einfach bei einem Server-Hintergrundsystem anzurufen oder eine Datenverbindung herzustellen, wobei bevorzugt seine ID oder ein Code überprüft wird, wonach bei positiver Überprüfung unverzüglich ein Freigabe-Signal an die zusätzliche Wegfahrsperre über deren Mobilfunkschnittstelle gesendet wird. Ebenso möglich ist ein Zugang über eine direkte Daten- oder Telefonverbindung zwischen dem Mobiltelefon und der zusätzlichen Wegfahrsperre. Ein zusätzlicher Nahfeldfunkkommunikations-Chip, wie beispielsweise ein RFID- oder NFC-Chip, ist also nicht mehr notwendig.

Ein weiterer Vorteil ist eine Überwachung eines Zustandes eines Smart-Relais als Unterbrecherrelais, das bevorzugt drahtgebunden mit der zusätzlichen Wegfahrsperre verbunden ist und daher auch ggf. aufgefunden werden kann. Wird das Smart-Relais aufgefunden und überbrückt oder abgeklemmt, wird dies als eine Änderung des Zustands des Smart-Relais von der Wegfahrsperre erkannt, worauf ein Diebstahlalarm ausgelöst wird. Bevorzugt kann der Diebstahlalarm über die Mobilfunkschnittstelle ausgesendet werden, beispielsweise zu einem Inhaber des Fahrzeugs oder zu einem Server-Hintergrundsystem .

Bevorzugt ist in der elektronischen Wegfahrsperre auch beispielsweise ein GPS-Positionsempfangsmodul integriert, so dass im Falle eines Diebstahlalarms auch zugleich Positionsdaten mit übertragen und das Fahrzeug dadurch verfolgt werden können. Bevorzugt ist zudem ein Beschleunigungssensor in der zusätzlichen Wegfahrsperre integriert, der ein Ziehen oder Zerren an der zusätzlichen Wegfahrsperre detektiert und dadurch ebenfalls frühzeitig einen Diebstahlalarm aussenden kann. Dies erschwert für einen Dieb das Überbrücken des Unterbrecherrelais bzw. des Smart-Relais drastisch, was sich herumsprechen und dadurch die Diebstahlquote senken wird.

Besonders vorteilhaft ist auch eine Anbindung eines drahtlosen Unterbrecherrelais bzw. eines Funkrelais an die zusätzliche Wegfahrsperre, um dadurch eine Verfolgung von Anschlussdrähten bzw. ein Auffinden des drahtlosen Unterbrecherrelais den Dieb deutlichdurch zu erschweren. Auch ist ein Verbau des drahtlosen Unterbrecherrelais deutlich einfacher und schneller vornehmbar als ein Verbau eines drahtgebundenen Unterbrecherrelais, was Zeit und dadurch Einbaukosten spart. Bei herkömmlichen zusätzlichen Wegfahrsperren dahingegen können die Einbaukosten der zusätzlichen Wegfahrsperre mit den entsprechenden drahtgebundenen Unterbrecherrelais oft über den Kosten der zusätzlichen Wegfahrsperre selbst liegen.

Idealerweise würde das Smart-Relais ebenfalls drahtlos an die zusätzliche Wegfahrsperre angebunden werden, so dass sich dadurch beide Vorteile ergeben würden: a) der erleichterte Verbau des Smart-Relais mit deutlich reduzierten Einbaukosten, als auch b) das erschwerte Auffinden durch den Dieb.

Weitere bevorzugte und vorteilhafte Merkmale und Vorteile der Erfindung werden durch die Hauptansprüche und durch die abhängigen Ansprüche offenbart.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

### Kurzbeschreibung der Zeichnungen

Fig. 1 zeigt eine Systemübersicht zu einer elektronischen Wegfahrsperre mit ihren Schnittstellen, wie beispielsweise eine Mobilfunkschnittstelle zu einem Server-Hintergrundsystem, eine Schnittstelle zu einem zentralen Schließsystem, zu einem Fahrzeugbus, zu einer Nahfeldkommunikation, zu einem drahtlosen Relais, zu einem Smart-Relais und mit einem Positionsfunkempfangsmodul.
Fig. 2a zeigt schematische Darstellung einer bevorzugten Smart -Relais-Schnittstelle.
Fig. 2b zeigt eine schematische Darstellung einer weiteren bevorzugten Smart-Relais-Schnittstelle.

### Detaillierte Beschreibung einer bevorzugten Ausführungsform

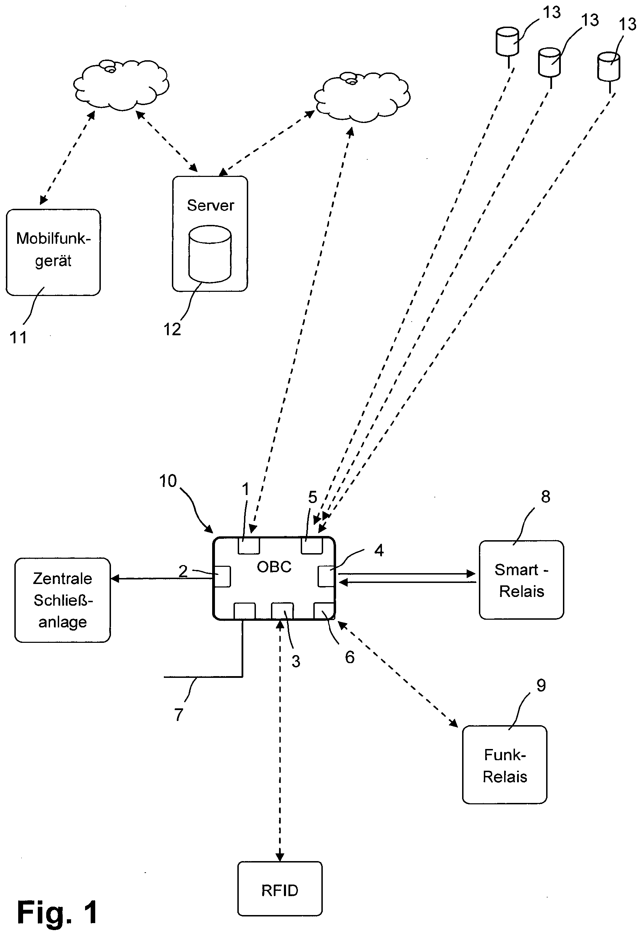

Fig. 1 zeigt eine Systemübersicht zu einer Fahrzeug-Freigabe bzw. einer Fahrzeug-Wegfahrsperre im Rahmen eines Car-Sharing-Konzepts, mit einer zusätzlichen Wegfahrsperre 10, wobei die zusätzliche Wegfahrsperre 10 in einem Fahrzeug verbaut ist und über eine integrierte Mobilfunkschnittstelle 1 bevorzugt mit einem externen Server-Hintergrundsystem 12 kommuniziert. Die zusätzliche Wegfahrsperre 10 umfasst verschiedene weitere Schnittstellen zum Fahrzeug, wie beispielsweise zu mindestens einem angebundenen Unterbrecherrelais, das im Fahrzeug verbaut ist und durch eine Schnittstelle zu einem zentralen Schließsystem. Die Mobilfunkschnittstelle 1 in der zusätzliche Wegfahrsperre 10 weist entweder eine integrierte oder eine externe Antenne auf, so dass ein Mobilfunksignal damit empfangen und eine Datenkommunikation bevorzugt mit dem Server-Hintergrundsystem 12 hergestellt werden kann. Über die Datenkommunikation können an die zusätzliche Wegfahrsperre 10 beispielsweise ein Freigabe- oder ein Wegfahrsperrsignal und erlaubte Zugangsdaten übermittelt werden, aber es können dabei auch bevorzugt Fahrzeugdaten, wie beispielsweise Tankfüllstand, Position, Batteriezustand etc. zum Server-Hintergrundsystem 12 zurückgesendet werden. Einer knapperen Ausdrucksweise wegen wird die zusätzliche Wegfahrsperre (10), die zusätzlich zu einem Zündschloß mit Zündschlüssel oder RFID-Schlüssel fungiert, nachfolgend nur noch Wegfahrsperre (10) genannt, ist aber immer zusätzlich zu einer standardmäßigen Wegfahrsperre im Fahrzeug zu verstehen.

Das Server-Hintergrundsystem 12 ist bevorzugt mit einer relationalen Datenbank verknüpft, in der alle Fahrzeuge registriert sind, beispielsweise mit Bezug auf einen Besitzer und verschiedene zugelassene Fahrer. In einem bevorzugten Car-Sharing-Konzept können Fahrer, auch Kunden genannt, sich bei einem Autobesitzer melden und um Erlaubnis einer Nutzung seines Fahrzeugs anfragen. Wird die Nutzung gewährt, so wird der Name des Kunden in der Datenbank registriert und für zukünftige Anmietungen zugelassen. Bevorzugt können dabei Mietzeiten im Voraus reserviert werden, bestimmte Kunden oder der Vermieter selbst priorisiert werden, eine Abrechnung erfolgen etc. Ist nun in einem Beispielfall eine Anmietung reserviert worden und steht der Kunde vor dem Fahrzeug, so sendet er bevorzugt mit einem Mobilfunkgerät 11 entweder eine SMS an das Server-Hintergrundsystem 12 oder nimmt mit dem Server 12 eine andere Verbindung auf, wobei nach einer Prüfung des Kunden in Verbindung mit dem anzumietenden Fahrzeug durch das Server-Hintergrundsystem 12 an die Wegfahrsperre 10 in dem Fahrzeug ein Freigabesignal über die Mobilfunkschnittstelle 1 gesendet wird, worauf die Wegfahrsperre 10 bevorzugt die Fahrertüre öffnet und die Wegfahrsperrfunktion im Fahrzeug deaktiviert bzw. das Fahrzeug freigibt. Da der Fahrzeugschlüssel an einem bekannten Ort im Fahrzeug deponiert ist, kann der Kunde den Motor starten und losfahren. Am Ende einer Fahrt wird ebenfalls ein Signal an das Server-Hintergrundsystem 12 gesendet, wonach in der Datenbank bevorzugt ein Ende der Fahrt und ggf. eine Position des Fahrzeug registriert werden. Daraufhin sendet das Server-Hintergrundsystem 12 an die Wegfahrsperre 10 des Fahrzeugs das Wegfahrsperrsignal, worauf die Wegfahrsperre 10 im Fahrzeug ein Schließen der Türen und eine Aktivierung des mindestens einen Unterbrecherrelais steuert. Auch ist eine direkte Kommunikation zwischen dem Mobilfunkgerät 11 und der Wegfahrsperre 10 denkbar, wobei beispielsweise ein bestimmter Code als Freigabe- oder als Wegfahrsperrsignal übermittelt werden muss. Die Kommunikation zwischen der Wegfahrsperre 10 und dem Server-Hintergrundsystem 12 mit einem Datenaustausch zur Freigabe bzw. zu einer Sperrung eines Kunden oder eines Fahrzeugs oder dergleichen ist auf viele verschiedene Arten bekannt und möglich, für die die elektronische Wegfahrsperre 10 gemäß der vorliegenden Erfindung eingesetzt werden kann.

Die erfindungsgemäße Wegfahrsperre 10 basiert im Wesentlichen auf einer Mikrokontrollersteuerung mit einem Mikrokontroller und einen Speicher, der mit dem Mikrokontroller entweder integral oder extern verbunden ist, die ein bestimmtes Ablaufprogramm umfasst, in Verbindung mit verschiedenen Schnittstellen steht und dabei insbesondere mindestens ein Unterbrecherrelais, auch Smart-Relais (8) genannt, auf eine unerlaubte Überbrückung hin überwacht. Der Begriff "Smart-Relais" steht dabei für ein Unterbrecherrelais, das sich bevorzugt dadurch auszeichnet, indem es eine Elektronik zur Überwachung einer unerlaubten Überbrückung und/oder eines Abklemmens des Unterbrecherrelais umfasst.

Die Wegfahrsperre 10 weist eine zweite Schnittstelle 2 zu einem zentralen Schließsystem auf, über die durch entsprechende Steuersignale Türen, wie beispielsweise die Fahrertüre geöffnet bzw. geschlossen werden können. Die zweite Schnittstelle 2 kann beispielsweise eine Spannungs- oder Stromschnittstelle zu einem Öffner- bzw. Schließventil sein, eine CAN-Bus-, eine ODB2- oder eine sonstige Schnittstelle sein.

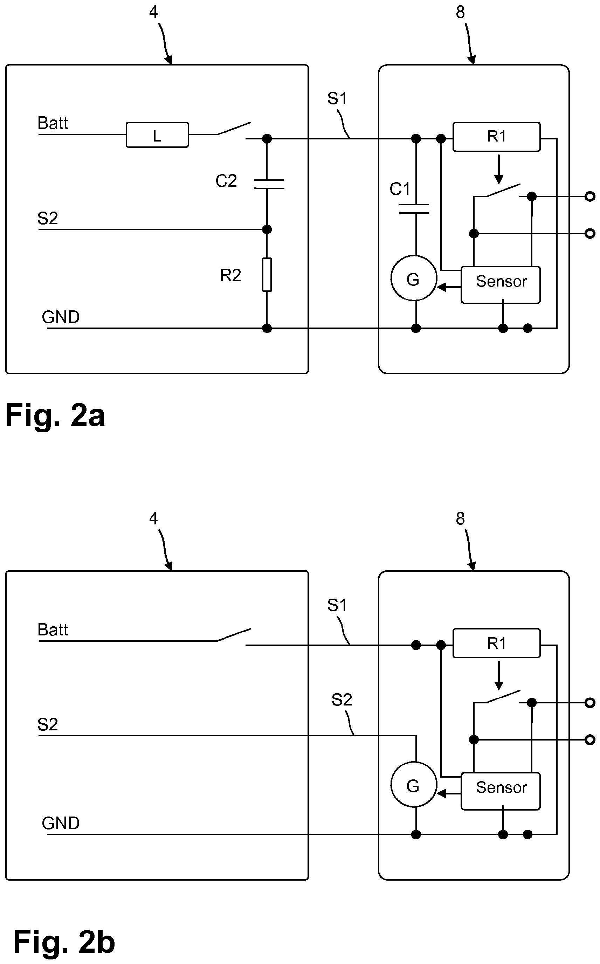

Desweiteren weist die Wegfahrsperre 10 eine Smart-Relais-Schnittstelle 4 auf, über die ein Steuersignal S1 an das Smart-Relais 8 ausgesendet und über die auch ein Empfangssignal S2 vom Smart-Relais 8 empfangen werden kann. Bevorzugt kann das Empfangssignal S2 vom Smart-Relais 8 ein Signal sein, das, wie in Fig. 2a skizziert, bevorzugt entweder auf einer Steuerleitung, durch die auch das Steuersignal S1 ausgesendet wird, zurück übertragen wird, oder es kann für das Empfangssignal S2 auch eine separate Leitung vorgesehen werden, wie beispielsweise in Fig. 2b skizziert. Andere Möglichkeiten, beispielsweise einer Modulation bzw. einer Überlagerung des Empfangssignals S2 auf eine Vorort am Smart-Relais 8 angeschlossene Batterieleitung ist auch vorstellbar, so dass das Empfangssignal S2 über die Batterieversorgungsspannung der Wegfahrsperre 10 detektierbar wäre. Auch ist es vorstellbar, das Empfangssignal S2 per Funk zur Smart-Relais-Schnittstelle 4 zu übertragen. Das Empfangssignal S2 wird dabei erfindungsgemäß vom Smart-Relais 8 und in Abhängigkeit der Signale an den Unterbrecherkontakten, die mit dem Fahrzeug bzw. mit beispielsweise der Benzinpumpe oder der Zündung verbunden sind, in Verbindung stehen. Dabei werden bevorzugt kleine Ströme in den jeweiligen Kontakt eingespeist, so dass sich über eine Spannungsmessung an dem jeweiligen Kontakt bestimmen läßt, ob der Kontakt von außen angeschlossenen Leitungen, die zur Batteriespannung Batt oder zur Masse GND bestimmte Widerstände und Kapazitäten aufweisen, beispielsweise abgetrennt worden ist oder ob die Kontakte plötzlich kurzgeschlossen bzw. mit anderen Leitungen verbunden worden sind.

Das Smart-Relais 8 weist eine Sensorschaltung auf, um damit mindestens einen der Unterbrecherkontakte zu überwachen, wobei dabei ein oder mehrere folgender Parameter überwacht bzw. gemessen werden: eine Spannung, ein Strom, eine Impedanz und/oder eine Reaktanz nach Masse (GND) oder zur Batterieversorgung (Batt) oder zwischen zwei der Unterbrecherkontakte, oder ein Signal.

Dabei ist es auch denkbar, dass im Smart-Relais 8 zusätzlich DMS-Sensoren eingesetzt werden, über die detektierbar ist, ob das Smart-Relais 8 mechanisch beansprucht wird, beispielsweise durch ein Wegbiegen eines Kontaktes oder durch ein Herausziehen.

Fig. 2a zeigt eine einfache, bevorzugte Schaltung der Smart-Relais-Schnittstelle 4, bei der das Steuersignal S1 durch Schalten eines Batteriespannung Batt mit einer in Reihe gelegten Induktivität L erfolgt und an das Smart-Relais 8 geleitet wird. Durch die Induktivität L in Serie zur Batteriespannung Batt wird im Wesentlichen nur ein DC Signal zum Smart-Relais 8 hin übertragen. Im Smart-Relais 8 wird durch eine dort vorhandene Sensorschaltung 'Sensor' der Zustand des jeweiligen Unterbrecherkontaktes bzw. die Anschaltung von außen mit dem jeweiligen Unterbrecherkontakt gemessen und durch einen Generator G in ein Generatorsignal umgewandelt, das über einen ersten Kondensator C1 in das Steuersignal S1 eingekoppelt wird. Das so dem Steuersignal S1 überlagerte Generatorsignal wird von der Smart-Relais-Schnittstelle 4 empfangen und durch eine einfache R2C2-Filterschaltung als das Empfangssignal S2 ausgekoppelt. Andere Übertragungsmöglichkeiten des Generatorsignals sind ebenso vorstellbar, wie beispielsweise durch eine zusätzliche Leitung oder durch eine zusätzliche Funkübertragung.

Bevorzugt wird das Empfangssignal S2 von einem Analog-Digitalwandler in ein digitales Signal umgewandelt und von der Mikrokontrollersteuerung ausgewertet. Eine Auswertung durch die Mikrokontrollersteuerung kann dann beispielsweise dadurch erfolgen, dass ein Anfangszustand, der einer bestimmten Signalstärke entspricht, gemessen wird und der weitere zeitliche Verlauf überwacht bzw. analysiert wird. Wird beispielsweise in einem kurzen Zeitintervall eine Änderung registriert, die eine bestimmte Grenze überschreitet, wird dies als ein unerlaubter Zustand gewertet, der dann bevorzugter maßen einen Diebstahlalarm durch die Mikrokontrollersteuerung auslöst. Durch Bestimmung eines anfänglichen Empfangssignals S2 und/oder durch Lernen von erlaubten Veränderungen Empfangssignals S2 und Abspeichern entsprechender Grenzwerte kann für verschiedene Fahrzeugtypen als auch für eine verschiedenartige Verkabelung von Fahrzeug zu Fahrzeug die Wegfahrsperre 10 leicht angepasst werden. Die Auswertung des Empfangssignals S2 ist aber auch ebenso durch eine Elektronik in der Smart-Relais-Schnittstelle 4 denkbar, so dass ein schon vorverarbeitetes und bevorzugt binäres Empfangssignal S2 von der Mikrokontrollersteuerung ausgewertet werden kann, um dadurch Rechenleistung und Strom zu sparen. Auch kann bevorzugt die Mikrokontrollersteuerung von einer Detektoreinheit, die die Signalvorverarbeitung des Empfangssignals S2 und eine Detektion einer Zustandsänderung bzw. einer unerlaubten Zustandsänderung übernimmt, beispielsweise geweckt werden.

Der Diebstahlalarm kann dann entweder ein offener Diebstahlalarm sein, wie beispielsweise ein Hupen, ein Blinken der Autolichter, wobei die Steuerung beispielsweise über einen Fahrzeugbus erfolgt, oder der Diebstahlalarm wird als nicht nach außen sichtbarer Diebstahlalarm verarbeitet, beispielsweise durch Senden eines Mobilfunksignals an das Server-Hintergrundsystem 12. Im Diebstahlalarmfall können auch Positionsdaten und andere Fahrzeugdaten zum Server-Hintergrundsystem 12 gesendet werden. Andere Diebstahlalarmprozesse, wie beispielsweise eine Reduzierung der Fahrleistung des Fahrzeugs und ähnliches sind ebenso denkbar.

Eine andere Art der Detektion des Zustands der Smart-Relais-Kontakte ist ebenso vorstellbar, wie indem an dem jeweiligen Unterbrecherkontakt beispielsweise eine Kapazität gegen Masse oder gegen die Batteriespannung Batt gemessen wird. Dabei kann auch bevorzugt das ausgesendete Steuersignal S1 ein Spannungssignal und das empfangbare Signal S2 ein Stromsignal, oder das ausgesendete Steuersignal S1 ein Stromsignal und das empfangbare Signal S2 ein Spannungssignal sein.

Auch ist es denkbar die Smart-Relais-Schnittstelle (4) als eine drahtlose Schnittstelle aufzubauen, was den Vorteil mit sich bringt, das das Smart-Relais 8 in diesem Fall wesentlich erschwert von einem Dieb aufgefunden werden kann.

Bevorzugt umfasst die Wegfahrsperre 10 auch eine Fahrzeugbus-Schnittstelle 7, wie beispielsweise eine CAN-Bus- oder eine OBD-2-Schnittstelle. Über die Fahrzeugbus-Schnittstelle 7 kann die Wegfahrsperre 10 das Freigabe- bzw. das Wegfahrsperrsignal bevorzugt auch an eine Motorsteuereinheit weiterleiten, die eine Wegfahrsperre eines Fahrzeug-Herstellers ist. Auch kann darüber beispielsweise der Diebstahlalarm übermittelt werden oder die Autolampen in einen Blinkmodus geschaltet werden. Ebenso können über die Fahrzeugbus-Schnittstelle 7 bevorzugt auch die Türen geöffnet bzw. verschlossen werden. Über die Fahrzeugbus-Schnittstelle 7 sind bevorzugt auch Aktivitäten im Fahrzeug detektierbar, wie beispielsweise ein Starten des Motors, Sitzverstellsignale, Türöffnungs- und Lichtsignale, wie sie vor oder bei einem Fahren auftreten. Werden solche Aktivitäten durch die Fahrzeugbus-Schnittstelle 7 oder aber auch durch andere Signalleitungen der Wegfahrsperre 10 mitgeteilt, so kann im Zustand einer aktivierten Wegfahrsperre ebenso ein Diebstahl detektiert und ein Diebstahlalarm ausgelöst werden.

Die Wegfahrsperre 10 weist ferner eine Nahfeldfunkschnittstelle 3 auf, die beispielsweise eine RFID-, eine NFC- oder eine Bluetooth Schnittstelle ist, um bei fehlender Verbindung über die Mobilfunkschnittstelle 1 dem Kunden bzw. Fahrer eine Rückfalllösung zu ermöglichen, das Fahrzeug zu öffnen bzw. zu verschließen. Beim Verschließen bei fehlender Mobilfunkverbindung kann es dann sinnvoll sein, die Fahrzeugschlüssel aus dem Fahrzeug zu nehmen. Bevorzugt kann die Wegfahrsperre 10 auch durch die Nahfeldfunkschnittstelle 3 bzw. durch das Nahfeldfunksignal entsperrt bzw. gesperrt werden. Eine bestimmte Code-Übertragung mit dem Nahfeldfunksignal bewirkt eine Autorisierung für die Wegfahrsperre 10 bzw. eine Freigabe. Die entsprechende Antennenschnittstelle kann dabei beispielsweise in der Wegfahrsperre 10 oder extern hinter der Windschutzscheibe platziert sein.

Bevorzugt umfasst die Wegfahrsperre 10 auch ein Positionsempfangsmodul 5, das beispielsweise ein GPS- oder ein Galileo-Modul ist, um dadurch ein Positionssignal von Satteliten 13 über eine weitere entsprechende Antennenschnittstelle zu empfangen. Dabei werden die empfangenen Positionssignale bevorzugt bei der Datenkommunikation zum Server-Hintergrundsystem 12 übertragen, um beispielsweise den für das Fahrzeug zugelassenen Kunden eine genaue aktuelle Parkposition mitzuteilen, wo das Fahrzeug für einen nächsten Kunden abgestellt ist. Bevorzugt umfasst das Positionsempfangsmodul 5 auch noch integriert oder extern eine Koppelnavigation (Dead-Reckoning). Eine Bestimmung der Positionsdaten des Fahrzeugs ist aber auch über eine terrestrische Mobilfunksignalortung möglich. Bevorzugt werden die Positionsdaten im Falle eines Diebstahlalarms auch an das Server-Hintergrundsystem oder an andere übertragen.

In diesem Zusammenhang sei auch bemerkt, dass auch wenn die hierin beschriebenen Module und Schnittstellen separat aufgeführt sind, eine höhere Integration ebenso vorstellbar ist, dass beispielsweise das Koppelnavigationsmodul entweder im Positionsempfangsmodul 5 oder in der Mikrokontrollersteuerung enthalten sein kann, oder dass die Mikrokontrollersteuerung beispielsweise ein Teil eines leistungsfähigen Mobilfunkmoduls sein kann.

Eine weitere bevorzugte Ausführungsform der Wegfahrsperre 10 weist eine zusätzliche Funkrelais-Schnittstelle 6 zur Kommunikation mit einem Funkrelais 9 auf, die mit der Mikrokontrollersteuerung, ähnlich wie die Smart-Relais-Schnittstelle 4, verbunden ist. Die Funkrelais-Schnittstelle 6 weist dabei ein entsprechendes Funkmodul mit einer weiteren entsprechenden Antennenschnittstelle auf, wobei das entsprechende Funkmodul ein Funksignal aussendet, das von dem Funkrelais 9 empfangen werden kann. Bevorzugt aber nicht notwendigerweise ist die Kommunikation zwischen der Funkrelais-Schnittstelle 6 und dem Funkrelais 9 bidirektional, so dass auch eine Sensorüberwachung und ein Signal über den Zustand der Unterbrecherkontakte im Funkrelais 9, ähnlich wie bei dem Smart-Relais 8, vorgenommen bzw zurückgesendet werden kann. Für das Funkrelais 9 bestehen bevorzugt die gleichen Möglichkeiten der Sensorik für die Überwachung der Unterbrecherkontakte, wie beim Smart-Relais 8 beschrieben. Lediglich wird das Sensor-, oder Generatorsignal nicht per Signalleitungsdraht sondern drahtlos oder aber auch über eine Einspeisung bzw. Überlagerung auf die Batterieversorgungsspannung zur Wegfahrsperre 10 hin übertragen und dort als entsprechendes Empfangssignal S2 detektiert und ausgewertet bzw. überwacht.

Über die Funkrelais-Schnittstelle 6 wird das Funkrelais 9 entsprechend dem in der Mikrokontrollersteuerung detektierten, jeweiligen Freigabesignal oder Wegfahrsperrsignal angesteuert bzw. aktiviert oder deaktiviert.

Bevorzugt ist die Mobilfunkschnittstelle 1 mit einem GSM/GPRS-Mobilfunkmodul ausgestattet; andere Mobilfunkmodule, wie beispielsweise basierend auf UMTS, LTE, CDMA, WIFI, WIMAX sind aber genauso vorstellbar.

Eine bevorzugte Ausführungsform der Wegfahrsperre 10 weist auch einen Beschleunigungssensor auf, über den bei aktivierter Wegfahrsperre beispielsweise festgestellt werden kann, ob in das Fahrzeug eingebrochen wird, ob die Wegfahrsperre 10 versucht wird, herauszuhebeln, um in einem solchen Fall frühzeitig einen Diebstahlalarm auszulösen.

Als Mobilfunkgerät gilt beispielsweise ein Mobiltelefon, ein Smartphone oder ebenso ein anderes Gerät, mit dem eine Telefon- oder Internetverbindung hergestellt werden kann.

Weitere mögliche Ausbildungsformen sind in den folgenden Ansprüchen beschrieben.

Die In den Ansprüchen genannten Bezugszeichen dienen der besseren Verständlichkeit, beschränken aber die Ansprüche nicht auf die in den Figuren dargestellten Formen.

### Bezugszeichen

- 1: Mobilfunkschnittstelle
- 2: zweite Schnittstelle (zu einem zentralen Schließsystem)
- 3: Nahfeldfunkschnittstelle
- 4: Smart-Relais-Schnittstelle
- 5: Positionsempfangsmodul
- 6: Funkrelais-Schnittstelle
- 7: Fahrzeugbus-Schnittstelle
- 8: Smart-Relais
- 9: Funkrelais
- 10: Wegfahrsperre
- 11: Mobilfunkgerät
- 12: Server-Hintergrundsystem
- 13: Satellit
- R1, R2, C1, C2, Sensor, G, L: Schaltungsbauelemente
- Batt: t, S1, S2, GND Leitung

## Patentansprüche

1. Wegfahrsperrsystem mit Türöffner- und Diebstahlalarmfunktion für ein Fahrzeug umfassend:
- eine elektronische Wegfahrsperre (10), die eine Smart-Relaisschnittstelle (4) aufweist, durch die ein Steuersignal (S1) ausgesendet und ein Empfangssignal (S2) empfangen wird; und
- ein Smart-Relais (8), das als ein Unterbrecherrelais ausgebildet ist, um das von der elektronischen Wegfahrsperre (10) ausgesendete Steuersignal (S1) zu empfangen und das Empfangssignal (S2) an die elektronische Wegfahrsperre (10) auszusenden,
wobei das Smart-Relais (8):
- extern von der elektronischen Wegfahrsperre (10) angeordnet ist;
- ein internes Unterbrecherrelais mit Unterbrecherkontakten, die elektrisch nach außen geführt sind, umfasst;
- ausgebildet ist, durch das Steuersignal (S1), das aktivierend ist, das interne Unterbrecherrelais zu aktivieren, und bei dem Steuersignal (S1), das deaktivierend ist, das Unterbrecherrelais zu deaktivieren; und
- eine Sensorschaltung umfasst, die mindestens einen der Unterbrecherkontakte messend überwacht und daraus das entsprechende Empfangssignal (S2) erzeugt, wobei ein oder mehrere der folgenden Parameter gemessen werden, wie eine Spannung, ein Strom, eine Impedanz oder eine Reaktanz nach Masse (GND) oder zur Batterieversorgung (Batt) oder zwischen zwei der Unterbrecherkontakte oder ein Signal, um bei der Messung einen unerlaubten Zustand durch ein Überbrücken oder durch ein Abklemmen der nach außen geführten Unterbrecherkontakte erkennen zu können;
wobei die elektronische Wegfahrsperre (10) ferner umfasst:
a) eine Mikrokontrollersteuerung, umfassend einen Mikrokontroller und einen Speicher, der mit dem Mikrokontroller integral oder extern verbunden ist, und welche über das Steuersignal (S1) und das Empfangssignal (S2) mit dem Smart-Relais (8) in Verbindung steht;
b) eine Mobilfunkschnittstelle (1) mit einem Mobilfunkmodul zum Senden und Empfangen eines Mobilfunksignals über eine Antennenschnittstelle, wobei das Mobilfunkmodul mit der Mikrokontrollersteuerung verbunden ist;
c) eine zweite Schnittstelle (2) mit einem abgehenden Schließsystemsteuersignal zu einem zentralen Schließsystem für Türen des Fahrzeugs, wobei die zweite Schnittstelle (2) mit der Mikrokontrollersteuerung verbunden ist; und
d) eine Nahfeldfunkschnittstelle (3) mit einem Nahfeldfunkmodul zum Empfang eines Nahfeldfunksignals über eine weitere Antennenschnittstelle, wobei das Nahfeldfunkmodul mit der Mikrokontrollersteuerung verbunden ist;
e) wobei die Mikrokontrollersteuerung, wie folgt, ausgebildet ist:
- die Mobilfunkschnittstelle (1) und die Nahfeldfunkschnittstelle (3) empfangsbereit zu halten, um Daten zu empfangen;
- bei Empfang eines Wegfahrsperrsignals durch die Mobilfunkschnittstelle (1) oder durch die Nahfeldfunkschnittstelle (3), eine Wegfahrsperrfunktion zu aktivieren;
- bei Empfang eines Freigabesignals durch die Mobilfunkschnittstelle (1) oder durch die Nahfeldfunkschnittstelle (3), die Wegfahrsperrfunktion zu deaktivieren;
- bei aktivierter oder deaktivierter Wegfahrsperrfunktion das entsprechende Schließsystemsteuersignal und das entsprechende Steuersignal (S1), zum externen Smart-Relais (8), auszusenden, wobei das entsprechende Steuersignal (S1) aktivierend oder deaktivierend ist;
- das Empfangssignal (S2) hinsichtlich einer Änderung in einen unerlaubten Zustand zu überwachen und im Falle einer Detektion des unerlaubten Zustands einen Diebstahlalarm auszulösen.

2. Wegfahrsperrsystem gemäß Anspruch 1, die elektronische Wegfahrsperre (10) ferner umfassend ein Positionsempfangsmodul (5), das ein GPS-, ein Galileo-Modul oder ein anderes Positionsempfangsmodul (5) ist, das ein Positionssignal über eine fünfte Antennenschnittstelle empfängt und verarbeitet oder nicht verarbeitet an die Mikrokontrollersteuerung zur Verarbeitung weiterleitet.

3. Wegfahrsperrsystem gemäß Anspruch 1 oder 2, die elektronische Wegfahrsperre (10) zudem umfassend eine Funkrelais-Schnittstelle (6), die mit der Mikrokontrollersteuerung verbunden ist und eine entsprechende Funkrelais-Antennenschnittstelle aufweist, die mit einem Funkrelais (9) verbindbar ist, und wobei die Mikrokontrollersteuerung zudem so ausgebildet ist, dass bei Detektion des Freigabe-oder des Wegfahrsperrsignals ein entsprechendes Freigabe- oder Wegfahrsperrsignal über die Funkrelais-Schnittstelle (6) zum Funkrelais (9) ausgesendet wird.

4. Wegfahrsperrsystem gemäß Anspruch 3, wobei über die Funkrelais-Schnittstelle (6) vom Funkrelais (9) ein Funksignal empfangbar ist, das einen Zustand des Funkrelais (9) übermittelt, und wobei die Mikrokontrollersteuerung zudem so ausgebildet ist, dass das von der Funkrelais-Schnittstelle (6) empfangbare Funksignal hinsichtlich des Zustandes des Funkrelais (9) ausgewertet wird, und dass im Falle einer detektierten unerlaubten Zustandsänderung des empfangenen Funksignals ein Diebstahlalarm ausgelöst wird.

5. Wegfahrsperrsystem gemäß Anspruch 3 oder 4, wobei das Funkrelais (9) ein zum Smart-Relais (8) zusätzliches Unterbrecher-Relais ist, um an geeigneter Stelle im Fahrzeug eine weitere Wegfahrsperre zu bewirken.

6. Wegfahrsperrsystem gemäß einem oder mehreren der vorstehenden Ansprüche, wobei die Smart-Relais-Schnittstelle (4) eine drahtgebundene elektrische Schnittstelle ist, über die das Steuersignal (S1) zum Smart-Relais (8) ausgesendet wird und das Empfangssignal (S2) vom Smart-Relais (8) empfangbar ist.

7. Wegfahrsperrsystem gemäß Anspruch 6, wobei das über die Smart-Relais-Schnittstelle (4) ausgesendete Steuersignal (S1) ein Spannungssignal und das Empfangssignal (S2) ein Stromsignal ist oder das Steuersignal (S1) ein Stromsignal und das Empfangssignal (S2) ein Spannungssignal ist.

8. Wegfahrsperrsystem gemäß einem oder mehreren der vorstehenden Ansprüche 1 - 5, wobei die Smart-Relais-Schnittstelle (4) eine drahtlose Schnittstelle ist, wobei ein entsprechend codiertes Steuersignal (S1) zum Smart-Relais (8) ausgesendet wird und ein anderes entsprechend codiertes Empfangssignal (S2) vom Smart-Relais (8) empfangbar ist.

9. Wegfahrsperrsystem gemäß einem oder mehreren der vorstehenden Ansprüche, wobei die zweite Schnittstelle (2) eine Fahrzeugbusschnittstelle, eine CAN-Bus- oder eine OBD-2-Schnittstelle ist.

10. Wegfahrsperrsystem gemäß einem oder mehreren der vorstehenden Ansprüche, die elektronische Wegfahrsperre (10) ferner umfassend eine Fahrzeugbus-Schnittstelle (7), die eine CAN-Bus-, eine OBD-2 Schnittstelle oder eine andere Fahrzeugbus-Schnittstelle (7) ist, wobei die Mikrokontrollersteuerung zudem so ausgebildet ist, dass über die Fahrzeugbus-Schnittstelle (7) Aktivitäten im Fahrzeug detektierbar sind, wie ein Starten des Motors, Sitzverstellsignale, Lichtsignale oder andere Aktivitäten, wie sie vor oder bei einem Fahren auftreten, und dass falls solch eine Aktivität trotz aktivierter Wegfahrsperrfunktion detektiert wird, der Diebstahlalarm ausgelöst wird.

11. Wegfahrsperrsystem gemäß einem oder mehreren der vorstehenden Ansprüche, wobei die Mikrokontrollersteuerung zudem so ausgebildet ist, dass bei einem Auftreten des Diebstahlalarms ein entsprechendes Mobilfunksignal über die Mobilfunkschnittstelle (1) ausgesendet wird, wobei wenn aktuelle oder abgespeicherte Positionsdaten vorhanden sind, diese mit ausgesendet werden.

12. Verfahren zur funkgesteuerten Aktivierung und Deaktivierung einer Wegfahrsperrfunktion in einem Wegfahrsperrsystem gemäß einem oder mehreren der Ansprüche 1-11, wobei
- für das Wegfahrsperrsystem eine elektronische Wegfahrsperre (10) in Verbindung mit einem Smart-Relais (8) bereitgestellt wird;
- die elektronische Wegfahrsperre (10) eine Mikrokontrollersteuerung aufweist, die über ein abgehendes Steuersignal (S1) und ein eingehendes Empfangssignal (S2) mit dem Smart-Relais (8) in Verbindung steht;
- das Smart-Relais (8) ein extern von der elektronischen Wegfahrsperre (10) angeordnetes Unterbrecher-Relais darstellt, das durch das Steuersignal (S1) der elektronischen Wegfahrsperre (10) ansteuerbar ist;
- das Smart-Relais (8) zudem eine Sensorschaltung umfasst, wobei durch die Sensorschaltung mindestens einer der Unterbrecherkontakte durch eine Messung überwacht und daraus das entsprechende Empfangssignal (S2) erzeugt werden, wobei durch die Messung ein oder mehrere der folgenden Parameter gemessen werden, wie eine Spannung, ein Strom, eine Impedanz oder eine Reaktanz nach Masse (GND) oder zur Batterieversorgung (Batt) oder zwischen zwei der Unterbrecherkontakte oder ein Signal, um bei der Messung einen unerlaubten Zustand durch ein Überbrücken oder durch ein Abklemmen der nach außen geführten Unterbrecherkontakte erkennen zu können; und
- wobei das Verfahren folgende Schritte umfasst:
a) Herstellen einer Empfangsbereitschaft einer Mobilfunkschnittstelle (1) und einer Nahfeldfunkschnittstelle (3) in der elektronischen Wegfahrsperre (10) zum Empfang eines Freigabesignals oder eines Wegfahrsperrsignals;
b) bei Detektion des Freigabesignals in der elektronischen Wegfahrsperre (10)Deaktivieren der Wegfahrsperrfunktion in der elektronischen Wegfahrsperre (10) und dabei:
- Senden des entsprechenden Steuersignals (S1) für ein Deaktivieren des Smart-Relais (8), um dessen Unterbrecherrelais zu deaktivieren, und
- Senden eines Schließsystemsteuersignals für ein Türöffnen an ein Schließsystem im Fahrzeug, ausgehend von der Mikrokontrollersteuerung und über eine zweite Schnittstelle (2) der elektronischen Wegfahrsperre (10);
c) bei Detektion des Wegfahrsperrsignals in der elektronischen Wegfahrsperre (10)Aktivieren der Wegfahrsperrfunktion und dabei:
- Senden des entsprechenden Steuersignals (S1) für ein Aktivieren des Smart-Relais (8), um dessen Unterbrecherrelais zu aktivieren, und
- Senden eines entsprechenden Schließsystemsteuersignals für ein Türschließen an das Schließsystem;
d) Überwachen des Empfangssignals (S2) durch die elektronische Wegfahrsperre (10) und Bestimmen, ob im Empfangssignal (S2) eine Änderung in den unerlaubten Zustand vorliegt; und
e) Bei Detektion der Änderung des Empfangssignals S2 in den unerlaubten Zustands Auslösen eines Diebstahlalarms und Aussenden einer entsprechenden Nachricht über die Mobilfunkschnittstelle (1) und Mitübertragen von Positionsdaten, falls vorhanden,.

13. Verfahren gemäß Anspruch 12, wobei für das Wegfahrsperrsystem zudem ein separates Funkrelais (9) bereitgestellt wird, und das Funkrelais (9) durch die elektronische Wegfahrsperre (10) in Schritt c) aktiviert und in Schritt d) entsprechend deaktiviert wird.

14. Verfahren gemäß Anspruch 12 oder 13, wobei das Empfangssignal (S2) dem Steuersignal (S1) durch die Sensorelektronik des Smart-Relais (8) überlagert wird, und das Empfangssignal (S2) von der elektronischen Wegfahrsperre (10) entsprechend detektiert wird; und/oder
wobei die elektronische Wegfahrsperre (10) mit dem Smart-Relais (8) per Funk drahtlos in Verbindung steht.

## Claims

1. Immobilizer system having a door opener and theft alarm function for a vehicle, comprising:
- an electronic immobilizer (10) with a smart relay interface (4) by means of which a control signal (S1) is transmitted and a receiving signal (S2) is received; and
- a smart relay (8) configured as an interrupt relay for receiving the control signal (S1) emitted by the electronic immobilizer (10) and for transmitting the receiving signal (S2) to the electronic immobilizer (10),
the smart relay (8)
- being arranged outside the electronic immobilizer (10);
- comprising an internal interrupt relay with contact-breaker points lead electrically to the outside;
- being adapted for enabling the internal interrupt relay by means of the control signal (S1), which is enabling, and for disabling the interrupt relay by means of the control signal (S1) which is disabling; and
- comprising a sensor circuit which by measuring monitors at least one of the contact-breaker points and generates the respective receiving signal (S2) therefrom, with one or more of the following parameters being measured: a voltage, a current, an impedance or a reactance to ground (GND) or to the battery supply (Batt) or between two of the contact-breaker points or a signal for being able to recognize, during measurement, an impermissible state due to shorting or due to disconnection of the contact-breaker points lead to the outside;
the electronic immobilizer (10) further comprising:
a)a microcontrolling system, comprising a microcontroller and a memory connected integrally or externally to the microcontroller, and connected to the smart relay (8) via the control signal (S1) and the receiving signal (S2);
b) a mobile radio interface (1) having a mobile radio module for transmitting and receiving a mobile radio signal via an aerial interface, the mobile radio module being connected to the microcontrolling system;
c) a second interface (2) with an outgoing locking system control signal directed towards a central locking system for doors of the vehicle, the second interface (2) being connected to the microcontrolling system; and
d) a near-field radio interface (3) having a near-field radio module for receiving a near-field radio signal via an additional aerial interface, the near-field radio module being connected to the microcontrolling system;
e) the microcontrolling system being configured for:
- keeping the mobile radio interface (1) and the near-field radio interface (3) ready to receive data;
- enabling an immobilizer function when an immobilizer signal is received by the mobile radio interface (1) or by the near-field radio interface (3);
- disabling the immobilizer function when a release signal is received by the mobile radio interface (1) or by the near-field radio interface (3);
- transmitting the respective locking system control signal and the respective control signal (S1) to the external smart relay (8) with the immobilizer function enabled or disabled; the respective control signal (S1) being enabling or disabling;
- monitoring the receiving signal (S2) for a switching into an impermissible state and for triggering a theft alarm in case an impermissible state is detected.

2. Immobilizer system according to Claim 1, the electronic immobilizer (10) further comprising a position receiving module (5) which is a GPS or Galileo module or a different position receiving module (5) which receives a position signal via a fifth aerial interface and processes it or forwards it, without processing, to the microcontrolling system for processing purposes.

3. Immobilizer system according to Claim 1 or 2, the electronic immobilizer (10) additionally comprising a radio relay interface (6) which is connected to the microcontrolling system and has a corresponding radio relay aerial interface connectable to a radio relay (9), and the microcontrolling system additionally being configured such that when the release or the immobilizer signal are detected, a corresponding release or immobilizer signal is transmitted to the radio relay (9) via the radio relay interface (6).

4. Immobilizer system according to Claim 3, where a radio signal is receivable from the radio relay (9) via the radio relay interface (6), which signal indicates a state of the radio relay (9), and where the microcontrolling system is additionally configured such that the radio signal receivable by the radio relay interface (6) is evaluated with regard to the state of the radio relay (9) and such that if an impermissible alteration of the state of the received radio signal is detected, a theft alarm is triggered.

5. Immobilizer system according to Claim 3 or 4, where the radio relay (9) is an interrupter relay supplementary to the smart relay (8) for causing an additional immobilization at a suitable point in the vehicle.

6. Immobilizer system according to one or more of the above Claims, the smart relay interface (4) being a wire-bound electric interface via which the control signal (S1) is transmitted to the smart relay (8) and the receiving signal (S2) from the smart relay (8) can be received.

7. Immobilizer system according to Claim 6, where the control signal (S1) transmitted via the smart relay interface (4) is a voltage signal and the receiving signal (S2) is a current signal or the control signal (S1) is a current signal and the receiving signal (S2) is a voltage signal.

8. Immobilizer system according to one or more of the above Claims 1-5, wherein the smart relay interface (4) is a wireless interface; an accordingly encoded control signal (S1) being transmitted towards the smart relay (8) and a different, accordingly encoded receiving signal (S2) from the smart relay (8) being receivable.

9. Immobilizer system according to one or more of the above Claims, the second interface (2) being a vehicle bus interface, a CAN bus or an OBD-2 interface.

10. Immobilizer system according to one or more of the above Claims, the electronic immobilizer (10) further comprising a vehicle bus interface (7) which is a CAN bus, an OBD-2 interface or a different vehicle bus interface (7); the microcontrolling system in addition being configured such that activities inside the vehicle are detectable via the vehicle bus interface (7), such as starting of the engine, seat adjustment signals, light signals or other activities that may occur before or during driving; and such that, if such an activity is detected in spite of an enabled immobilizer function, the theft alarm is triggered.

11. Immobilizer system according to one or more of the above Claims, the microcontrolling system being additionally configured such that in case the theft alarm is triggered, a corresponding mobile radio signal is transmitted via the mobile radio interface (1); any existing current or stored position data being transmitted as well.

12. Method for radio-controlled enabling and disabling of an immobilizer function in an immobilizer system according to one or more of Claims 1-11, wherein
- for the immobilizer system, an electronic immobilizer (10) is provided in combination with a smart relay (8);
- the electronic immobilizer (10) has a microcontrolling system connected to the smart relay (8) via an outgoing control signal (S1) and an incoming receiving signal (S2);
- the smart relay (8) is an interrupter relay arranged externally to the electronic immobilizer (10), which relay can be triggered by the control signal (S1) of the electronic immobilizer (10);
- the smart relay (8) in addition comprises a sensor circuit, the sensor circuit monitoring at least one of the contact-breaker points by means of a measurement and creating the respective receiving signal (S2) therefrom; where in the measurement one or more of the following parameters are measured: a voltage, a current, an impedance or a reactance to ground (GND) or to the battery supply (Batt) or between two of the contact-breaker points or a signal for being able to recognize, during measurement, an impermissible state due to shorting or due to disconnection of the contact-breaker points lead to the outside; and
- wherein the method comprises the following steps:
a) causing a readiness to receive of a mobile radio interface (1) and of a near-field radio interface (3) in the electronic immobilizer (10) for receiving a release signal or an immobilization signal;
b) in case of detection of the release signal in the electronic immobilizer (10), disabling of the immobilizer function in the electronic immobilizer (10), and during this process:
- transmitting the respective control signal (S1) for disabling the smart relay (8) in order to disable its interrupter relay; and
- transmitting a locking system control signal for door opening to a locking system in the vehicle, starting from the microcontrolling system and via a second interface (2) of the electronic immobilizer (10);
c) in case of detection of the immobilizer signal in the electronic immobilizer (10), enabling of the immobilizer function, and during this process:
- transmitting the respective control signal (S1) for enabling the smart relay (8) in order to enable its interrupter relay; and
- transmitting a respective locking system control signal for locking the door to the locking system;
d) monitoring of the receiving signal (S2) by the electronic immobilizer (10) and determining whether the receiving signal (S2) contains a switching into the impermissible state; and
e) if a switching of the receiving signal S2 into the impermissible state is detected, triggering of a theft alarm and transmitting of a corresponding message via the mobile radio interface (1) with concomitant transmitting of any existing position data.

13. Method according to Claim 12, where for the immobilizer system a separate radio relay (9) is provided additionally and the radio relay (9) is enabled in step c) by the electronic immobilizer (10) and accordingly disabled in step d) .

14. Method according to Claim 12 or 13, wherein the receiving signal (S2) is superimposed on the control signal (S1) by the sensor electronics of the smart relay (8) and the receiving signal (S2) is accordingly detected by the electronic immobilizer (10); and/or
wherein the electronic immobilizer (10) is in wireless contact with the smart relay (8) by radio.

## Revendications

1. Système anti-démarrage, pourvu d'une fonction d'ouvre-porte et d'alarme antivol pour un véhicule, comprenant:
- un anti-démarrage électronique (10), lequel comporte une interface de relais intelligent (4) par laquelle est émis un signal de commande (S1) et réceptionné un signal de réception (S2); et
- un relais intelligent (8), lequel est conçu sous la forme d'un relais interrupteur, pour réceptionner le signal de commande (S1) émis par l'anti-démarrage électronique (10) et pour émettre le signal de réception (S2) à l'attention de l'anti-démarrage électronique (10),
le relais intelligent (8):
- étant placé en externe de l'anti-démarrage électronique (10);
- comprenant un relais interrupteur interne, pourvu de contacts interrupteurs, qui sont électriquement tirés vers l'extérieur;
- étant conçu pour activer le relais interrupteur interne par le signal de commande (S1) qui a un effet activateur, et pour désactiver le relais interrupteur lors du signal de commande (S1), qui a un effet désactivateur, et
- comprenant un circuit de capteur qui supervise par mesure au moins l'un des contacts interrupteurs et génère à partir de là le signal de réception (S2) correspondant, un ou plusieurs des paramètres suivants étant mesurés, comme une tension, un courant, une impédance ou une réactance de masse (GND} ou pour l'alimentation de la batterie (Batt) ou entre deux des contacts interrupteurs ou un signal, pour être en mesure d'identifier lors de la mesure un état inadmissible par un pontage ou par une déconnexion des contacts interrupteurs tirés vers l'extérieur;
l'anti-démarrage électronique (10) comprenant en outre;
a) une commande par microcontrôleur, comprenant un microcontrôleur et une mémoire, qui est connectée intégralement ou en externe avec le microcontrôleur et laquelle par l'intermédiaire du signal de commande (S1) et du signal de réception (S2) est en connexion avec le relais intelligent (8);
b) une interface de radiocommunication mobile (1), sur laquelle est connecté un module de radiocommunication mobile, destiné à émettre et à réceptionner un signal de radiocommunication mobile par l'intermédiaire d'une interface d'antenne, le module de radiocommunication mobile étant connecté avec la commande par microcontrôleur;
c) une deuxième interface (2) avec un signal de commande de système de verrouillage partant vers un système de verrouillage centralisé de portières du véhicule, la deuxième interface (2) étant connectée avec la commande par microcontrôleur; et
d) une interface radio à champ proche (3) pourvue d'un module radio à champ proche, destiné à réceptionner un signal radio à champ proche par l'intermédiaire d'une interface d'antenne supplémentaire, le module radio à champ proche étant connecté avec la commande par microcontrôleur;
e) la commande par microcontrôleur étant conçue de la manière suivante:
- pour maintenir en état disponible à la réception l'interface de radiocommunication mobile (1) et l'interface radio à champ proche (3), afin de réceptionner des données;
- lors de la réception d'un signal d'anti-démarrage par l'interface de radiocommunication mobile (1) ou par l'interface radio à champ proche (3), pour activer une fonction d'anti-démarrage;
- lors de la réception d'un signal de validation par l'interface de radiocommunication mobile (1) ou par l'interface radio à champ proche (3), pour désactiver la fonction d'anti-démarrage;
- lorsque la fonction d'anti-démarrage est activée ou désactivée, pour émettre le signal de commande de système de verrouillage correspondant et le signal de commande (S1) correspondant vers le relais intelligent (8) externe, le signal de commande (S1) correspondant ayant un, effet activateur ou désactivateur;
- pour superviser le signal de réception (S2) au niveau d'un changement dans un état inadmissible et en cas de détection de l'état inadmissible, pour déclencher une alarme antivol.

2. Système anti-démarrage selon la revendication 1, l'anti-démarrage électronique (10) comprenant en outre un module récepteur de position (5), qui est un module GPS, un module de Galileo ou un autre module récepteur de position (5), qui réceptionne et traite ou ne traite pas un signal de position par l'intermédiaire d'une cinquième interface d'antenne et le retransmet pour traitement à la commande par microcontrôleur.

3. Système anti-démarrage selon la revendication 1 ou 2, l'anti-démarrage électronique (10) comprenant en outre une interface de relais de radiocommunication (6), qui est connectée avec la commande par microcontrôleur et qui comporte une interface d'antenne de relais de radiocommunication correspondante, qui est susceptible d'être connectée sur un relais de radiocommunication (9), et la commande par microcontrôleur étant conçue de surcroît de sorte que lors d'une détection du signal de validation ou du signal d'anti-démarrage, un signal de validation ou d'anti-démarrage correspondant soit émis par l'intermédiaire de l'interface de relais de radiocommunication (6) vers le relais de radiocommunication (9).

4. Système anti-démarrage selon la revendication 3, par l'intermédiaire de l'interface de relais de radiocommunication (6), un signal de radiocommunication qui transmet un état du relais de radiocommunication (9) étant susceptible d'être réceptionné par le relais de radiocommunication (9), et la commande par microcontrôleur étant conçue de surcroît pour que le signal de radiocommunication susceptible d'être réceptionné par l'interface de relais de radiocommunication (6) soit évalué au niveau de l'état du relais de radiocommunication (9) et pour que dans le cas d'une détection d'un changement d'état inadmissible du signal de radiocommunication réceptionné, une alarme antivol soit déclenchée.

5. Système anti-démarrage selon la revendication 3 ou 4, le relais de radiocommunication (9) étant un relais interrupteur supplémentaire au relais intelligent (8), pour provoquer dans un endroit adapté dans le véhicule un anti-démarrage supplémentaire.

6. Système anti-démarrage selon l'une quelconque ou plusieurs des revendications précédentes, l'interface de relais intelligent (4) étant une interface électrique filaire, par l'intermédiaire de laquelle le signal de commande (S1) est émis vers le relais intelligent (8) et le signal de réception (S2) est susceptible d'être réceptionné par le relais intelligent (8).

7. Système anti-démarrage selon la revendication 6, le signal de commande (S1) émis par l'intermédiaire de l'interface relais intelligent (4) étant un signal de tension et le signal de réception (S2) étant un signal de courant ou le signal de commande (S1) étant un signal de courant et le signal de réception (S2) étant un signal de tension.

8. Système anti-démarrage selon l'une quelconque ou plusieurs des revendications précédentes 1 à 5, l'interface relais intelligent (4) étant une interface sans fil, un signal de commande (S1) codé en conséquence étant émis vers le relais intelligent (8) et un autre signal de réception (S2) codé en conséquence étant susceptible d'être réceptionné par le relais intelligent (8).

9. Système anti-démarrage selon l'une quelconque ou plusieurs des revendications précédentes, la deuxième interface (2) étant une interface de bus de véhicule, une interface de CAN-bus ou une interface OBD-2.

10. Système anti-démarrage selon l'une quelconque ou plusieurs des revendications précédentes, l'anti-démarrage électronique (10) comprenant en outre une interface de bus de véhicule (7), qui est une interface de CAN-bus, une interface OBD-2 ou une autre interface de bus de véhicule (7), la commande par microcontrôleur étant conçue par ailleurs de telle sorte, que par l'intermédiaire de l'interface de bus de véhicule (7), des activités soient détectables dans le véhicule, telles qu'un lancement du moteur, des signaux de réglage de sièges, des signaux lumineux ou d'autres activités telles qu'elles se produisent en amont ou lors d'une conduite, et que dans le cas où une telle activité serait détectée malgré que la fonction d'anti-démarrage soit activée, l'alarme antivol se déclenche.

11. Système anti-démarrage selon l'une quelconque ou plusieurs des revendications précédentes, la commande par microcontrôleur étant conçue par ailleurs de telle sorte, que lors de la production de l'alarme antivol, un signal de radiocommunication mobile correspondant soit émis par l'intermédiaire de l'interface de radiocommunication mobile (1), en présence de données de position actuelles ou mémorisées, celles-ci étant émises en concomitance.

12. Procédé, destiné à activer et à désactiver par commande radio une fonction d'anti-démarrage dans un système anti-démarrage selon l'une quelconque ou plusieurs des revendications 1 à 11,
- pour le système anti-démarrage, un anti-démarrage électronique (10) étant mis à disposition en association avec un relais intelligent (8);
- l'anti-démarrage électronique (10) comportant une commande par microcontrôleur, qui par l'intermédiaire d'un signal de commande (S1) partant et d'un signal de réception (S2) entrant est en connexion avec le relais intelligent (8) ;
- le relais intelligent (8) représentant un relais interrupteur placé en externe de l'anti-démarrage électronique (10), qui est amorçable par un signal de commande (S1) de l'anti-démarrage électronique (10);
- le relais intelligent (8) comprenant par ailleurs un circuit de capteur, par le circuit de capteur, au moins l'un des contacts interrupteurs étant supervisé par une mesure et le signal de réception (S2) correspondant étant généré à partir de là, la mesure mesurant l'un des paramètres suivants, comme une tension, un courant, une impédance ou une réactance de masse (GND) ou pour l'alimentation de la batterie (Batt) ou entre deux des contacts interrupteurs ou un signal, pour être en mesure d'identifier lors de la mesure un état inadmissible par un pontage ou par une déconnexion des contacts interrupteurs tirés vers l'extérieur; et
- le procédé comprenant les étapes suivantes consistant à:
a) établir une disponibilité en réception d'une interface de radiocommunication mobile (1) et d'une interface radio à champ proche (3) dans l'anti-démarrage électronique (10), pour la réception d'un signal de validation ou d'un signal d'anti-démarrage;
b) lors d'une détection d'un signal de validation dans l'anti-démarrage électronique (10), désactiver la fonction d'anti-démarrage dans l'anti-démarrage électronique (10) et à cet effet:
- émettre le signal de commande (S1) correspondant pour une désactivation du relais intelligent (8), pour désactiver son relais interrupteur, et
- émettre un signal de commande du système de verrouillage pour une ouverture de portière à l'attention d'un système de verrouillage dans le véhicule, partant de la commande par microcontrôleur et par l'intermédiaire d'une deuxième interface (2) de l'anti-démarrage électronique (10);
c) en cas de détection du signal d'anti-démarrage dans l'anti-démarrage électronique (10), activer la fonction d'anti-démarrage et a cet effet:
- émettre le signal de commande (S1) correspondant pour une activation du relais intelligent (8), pour activer son relais interrupteur, et
- émettre un signal de commande du système de verrouillage correspondant, pour une fermeture de portière à l'attention du système de verrouillage;
d) superviser le signal de réception (S2) par l'anti-démarrage électronique (10) et déterminer si un changement dans l'état inadmissible est présent dans le signal de réception (S2); et
e) en cas de détection du changement du signal de réception S2 dans l'état inadmissible, déclencher une alarme antivol et émettre une information correspondante par l'intermédiaire de l'interface de radiocommunication mobile (1) et transmettre en concomitance des données de positions, si elles existent.

13. Procédé selon la revendication 12, pour le système anti-démarrage étant mis à disposition en outre un relais de radiocommunication (9) séparé, et le relais de radiocommunication (9) étant activé par l'anti-démarrage électronique (10) dans l'étape c) et désactivé en conséquence dans l'étape d).

14. Procédé selon la revendication 12 ou 13, le signal de réception (S2) étant superposé au signal de commande (S1) par l'électronique de capteur du relais intelligent (8) et le signal de réception (S2) étant détecté en conséquence par l'anti-démarrage électronique (10) ; et/ou
l'anti-démarrage électronique (10) étant en radiocommunication sans fil avec le relais intelligent (8).
